# FASCICULE DE BREVET EUROPEEN

(11) **EP 3 197 653 B1**
(45) Date de publication et mention de la délivrance du brevet: **12.12.2018**
(21) Numéro de dépôt: 15771885.9
(22) Date de dépôt: 21.09.2015
(51) Int. Cl.: B28D 5/00, B28D 5/04, B23D 59/00

(54) **DISPOSITIF DE DÉCOUPE PAR FIL COMPORTANT UN SYSTÈME DE DÉTECTION ET DE MESURE D'UNE FLÈCHE DU FIL ET PROCÉDÉ DE MISE EN OEUVRE D'UN TEL DISPOSITIF**
DRAHTSCHNEIDEVORRICHTUNG MIT EINEM SYSTEM ZUM NACHWEIS UND ZUR MESSUNG EINER DURCHBIEGUNG DES DRAHTES UND VERFAHREN ZUM EINSETZEN SOLCH EINER VORRICHTUNG
CUTTING WIRE DEVICE COMPRISING A WIRE DETECTION AND A WIRE BOW MEASUREMENT SYSTEM AND METHOD OF USING THE SAME

(30) Priorité: 23.09.2014 FR 1458955
(43) Date de publication de la demande: 02.08.2017
(73) Titulaire: Commissariat à l'Énergie Atomique et aux Énergies Alternatives, 75015 Paris (FR)
(72) Inventeur: JERONIMO, Pedro, F-38260 La Cote Saint-André (FR); COUSTIER, Fabrice, F-73000 Chambéry (FR)
(74) Mandataire: Brevalex
(86) Numéro de dépôt international: PCT/EP2015/071547
(87) Numéro de publication internationale: WO 2016/046107

(56) Documents cités:
- EP-A1- 2 065 922
- EP-A1- 2 708 342
- WO-A1-2011/070386
- DE-A1- 10 232 768
- US-A1- 2013 144 420

## Description

### DOMAINE TECHNIQUE

La présente invention se rapporte au domaine général des dispositifs de découpe ou sciage par fil, notamment par fil diamanté, et plus particulièrement au domaine des systèmes de détection de la formation d'une flèche sur le fil de tels dispositifs.

L'invention trouve par exemple des applications dans l'industrie des composants électroniques, des ferrites, des quartz et/ou des silices, par exemple pour l'obtention en tranches fines (appelées « galettes » ou plus généralement « wafers » en anglais) de matériaux tels que le silicium cristallin, utilisé notamment pour la fabrication de cellules photovoltaïques, le saphir ou le carbure de silicium. Elle peut notamment être utilisée dans le cadre de l'éboutage de briques de matériaux tels que le silicium, ou encore pour la découpe de fond de lingots, par exemple de taille G5 (840 x 840 mm de fond), de taille G6 (1040 x 1040 mm de fond), ou plus.

Plus précisément, la présente invention a trait à un dispositif de découpe par fil selon le préambule de la revendication 1 et à un procédé de découpe par fil selon le préambule de la revendication 12.

### ÉTAT DE LA TECHNIQUE ANTÉRIEURE

Un tel dispositif et un tel procédé sont connus du document EP2708342A1.

Les dispositifs de découpe par fil connus comportent le plus souvent un fil, ou une nappe de fils, susceptible de se déplacer selon un mouvement continu ou alternatif en appui contre une pièce à découper en une ou plusieurs tranches définissant ainsi une zone de découpe. La zone de découpe peut être constituée d'un ensemble de poulies ou cylindres placés parallèlement. Ces cylindres appelés « guide-fils » peuvent être gravés avec une ou des gorges définissant l'intervalle entre les fils, autrement dit l'épaisseur des tranches à découper. La pièce à découper est fixée sur une table support qui se déplace perpendiculairement au fil. La vitesse de déplacement définie la vitesse de coupe. Le renouvellement du fil, ainsi que le contrôle de la tension, se font dans une partie définissant une zone de gestion du fil, située en dehors de la zone de découpe proprement dite. L'agent qui régit la découpe est par exemple un abrasif fixé sur le fil, ou un abrasif libre amené par barbotage. Le fil n'agit que comme transporteur.

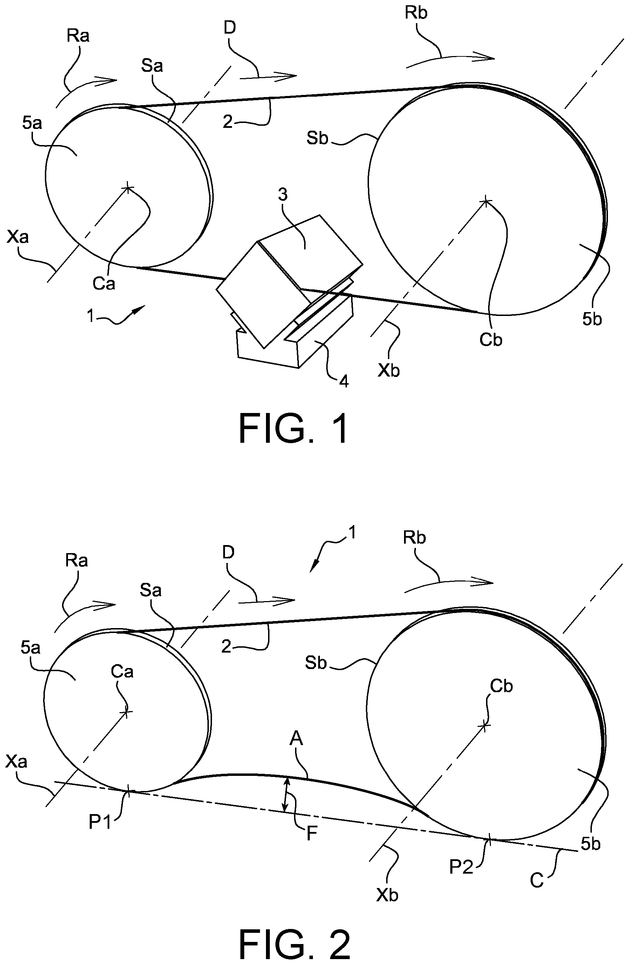

On a représenté sur la figure 1, selon une vue en perspective partielle, un exemple de dispositif 1 de découpe par fil 2 traditionnel.

Le dispositif 1 de découpe par fil 2 est utilisé pour permettre la découpe d'une pièce à découper 3, par exemple réalisée en un matériau tel que le silicium cristallin, utilisé par exemple pour la fabrication de cellules photovoltaïques, comme indiqué précédemment. La pièce à découper 3 est portée par un support 4 et mise en mouvement par rapport au fil 2 pour en permettre la découpe.

Le dispositif 1 comporte un premier organe rotatif 5a autour d'un premier axe de rotation Xa passant par son centre Ca et un deuxième organe rotatif 5b autour d'un deuxième axe de rotation Xb passant par son centre Cb. Les premier 5a et deuxième 5b organes rotatifs tournent respectivement selon des mêmes sens de rotation Ra et Rb, par exemple selon le sens horaire, de sorte à permettre le déplacement du fil 2 selon la direction D. Les premier Xa et deuxième Xb axes de rotation sont par ailleurs sensiblement parallèles entre eux. De cette façon, les premier 5a et deuxième 5b organes rotatifs permettent l'entraînement du fil 2 sensiblement perpendiculairement aux premier Xa et deuxième Xb axes de rotation.

De plus, lors de son entraînement, le fil 2 est en appui contre la surface extérieure Sa du premier organe rotatif 5a et contre la surface extérieure Sb du deuxième organe rotatif 5b, la surface extérieure Sa s'étendant autour du premier axe de rotation Xa, et la surface extérieure Sb s'étendant autour du deuxième axes de rotation Xb. Les organes rotatifs 5a, 5b comportent en outre chacun une poulie circulaire pourvue d'une gorge (non représentées) sur leur surface extérieure Sa, Sb pour permettre le positionnement et l'entraînement du fil 2.

De façon habituelle, lors de la découpe de la pièce 3, une flèche F peut apparaître sur le fil 2. La figure 2 illustre ainsi, selon une vue analogue à celle de la figure 1 sans la présence de la pièce à découper 3 et du support 4, l'apparition sur le fil 2 d'une flèche F.

Comme représenté sur la figure 2, la flèche F correspond au segment qui relie le milieu de l'arc de cercle A formé par le fil 2 et la corde C (en pointillés) définie par les deux points P1, P2 qui sont respectivement situés sur chaque organe rotatif 5a, 5b et sur l'arc de cercle A.

L'apparition de cette flèche F est provoquée par plusieurs phénomènes, et dépend notamment des paramètres utilisés pendant la découpe. Or, il est souvent souhaitable de pouvoir la détecter afin de pouvoir la prendre en considération lors du processus de découpe.

De façon classique, la présence de la flèche F formée sur le fil 2 est détectée par l'intermédiaire de systèmes optiques ou de capteurs mécaniques et/ou électriques. Un tel exemple de système de détection d'une flèche F sur le fil 2, comprenant des capteurs, est notamment décrit dans la demande de brevet EP 2 708 342 A1. Néanmoins, ces solutions de détection de la flèche F ne sont pas entièrement satisfaisantes et présentent plusieurs inconvénients. En particulier, de tels systèmes ou capteurs sont habituellement déportés, comme c'est le cas pour les capteurs utilisés dans la demande de brevet EP 2 708 342 A1, et encourent un risque constant d'être eux-mêmes endommagés par découpe lorsqu'ils se trouvent sur la trajectoire du fil 2. De plus, ils peuvent aussi être soumis à des projections de liquide, tel que du liquide de lubrification du fil 2, ce qui peut significativement perturber les résultats de détection.

### EXPOSÉ DE L'INVENTION

Par conséquent, il existe un besoin pour proposer une solution alternative pour la détection d'une flèche formée sur le fil d'un dispositif de découpe par fil. Il existe notamment un besoin pour concevoir une telle solution de fiabilité élevée et pouvant être automatisée.

L'invention a pour but de remédier au moins partiellement aux besoins mentionnés ci-dessus et aux inconvénients relatifs aux réalisations de l'art antérieur.

L'invention a ainsi pour objet, un dispositif de découpe par fil d'une pièce à découper, tel que défini par les caractéristiques de la revendication 1.

Grâce à l'invention, il peut être possible d'éviter, ou du moins de limiter, les inconvénients énoncés précédemment liés aux solutions connus de l'art antérieur pour la détection d'une flèche sur le fil d'un dispositif de découpe par fil. Par exemple, l'intégration dudit au moins un capteur de détection à l'intérieur dudit au moins l'un desdits au moins un premier organe rotatif et un deuxième organe rotatif peut permettre d'éviter un risque de détérioration, voire de destruction, du capteur en cas de problème dans la chambre de découpe.

En particulier, l'invention peut permettre de réaliser une détection et une mesure de la flèche de façon simple, fiable et systématique. En outre, l'invention présente un principe facilement transférable sur un équipement préexistant sans modification majeure de l'équipement.

Par ailleurs, le dispositif de découpe par fil peut aussi être défini par les caractéristiques des revendications dépendantes 2 à 11.

En outre, l'invention a trait à un procédé de découpe par fil d'une pièce à découper, défini par les caractéristiques de la revendication 12.

Le procédé peut en outre comporter une étape de calibrage du capteur de détection du système de détection et de mesure, cette étape de calibrage comportant notamment la variation de longueur d'une flèche formée sur le fil par le biais de moyens de formation d'une flèche au moyen d'un dispositif d'aide au calibrage du capteur de détection, le capteur de détection collectant différents signaux de détection du fil lors de cette variation de longueur de la flèche sur le fil. De plus, une corrélation entre le rapport cyclique d'apparition de la flèche et la longueur de la flèche peut être effectuée à l'issue de l'étape de calibrage.

Le procédé peut aussi comporter l'étape de détection et de mesure de la flèche formée sur le fil du dispositif par l'intermédiaire du capteur de détection et du système électronique de traitement du système de détection et de mesure du dispositif, et l'étape de transmission de données à un automate d'asservissement du fonctionnement du dispositif de découpe par fil.

Grâce à l'invention, il est ainsi possible d'obtenir une mesure de la flèche par une interprétation de rapport cyclique.

Par ailleurs, le procédé peut comporter l'étape d'asservissement du fonctionnement du dispositif de découpe par fil, celle-ci comportant la fourniture d'une consigne de rapport cyclique d'apparition de la flèche, la détermination de la vitesse de rotation correspondante desdits au moins un premier et un deuxième organes rotatifs du dispositif, la détection et la mesure de la flèche sur le fil, et l'ajustement éventuel de la consigne de rapport cyclique d'apparition de la flèche en fonction de cette détection et mesure de la flèche.

Le dispositif de découpe par fil et le procédé selon l'invention peuvent comporter l'une quelconque des caractéristiques énoncées dans la description, prises isolément ou en combinaison, sous réserve que cela soit techniquement possible et soit couvert par l'étendue des revendications.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 représente, selon une vue en perspective partielle, un exemple de dispositif de découpe par fil traditionnel,
- la figure 2 illustre, selon une vue en perspective partielle, l'apparition d'une flèche sur le fil d'un dispositif de découpe par fil traditionnel du type de celui de la figure 1,
- la figure 3 représente, selon une vue de face partielle, un exemple d'organe rotatif d'un dispositif de découpe par fil conforme à l'invention, comportant un capteur de détection de la présence du fil,
- la figure 4 représente, selon une vue de face partielle, un autre exemple de dispositif de découpe par fil conforme à l'invention, comportant un dispositif d'aide au calibrage,
- la figure 5 illustre, schématiquement et partiellement, l'évolution du signal de détection reçu par un capteur de détection d'un dispositif de découpe par fil conforme à l'invention en fonction de l'angle de rotation d'un organe rotatif comportant un tel capteur, pour une configuration de présence d'une flèche sur le fil et une configuration d'absence de flèche sur le fil, et
- la figure 6 est un schéma-blocs illustrant l'étape d'asservissement d'un procédé de découpe par fil conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 et 2 ont déjà été décrites précédemment dans la partie relativement à l'état de la technique antérieure. De cette façon, les éléments communs aux figures 1 et 2 et aux figures suivantes 3 à 6 ne seront pas décrits de nouveau par la suite.

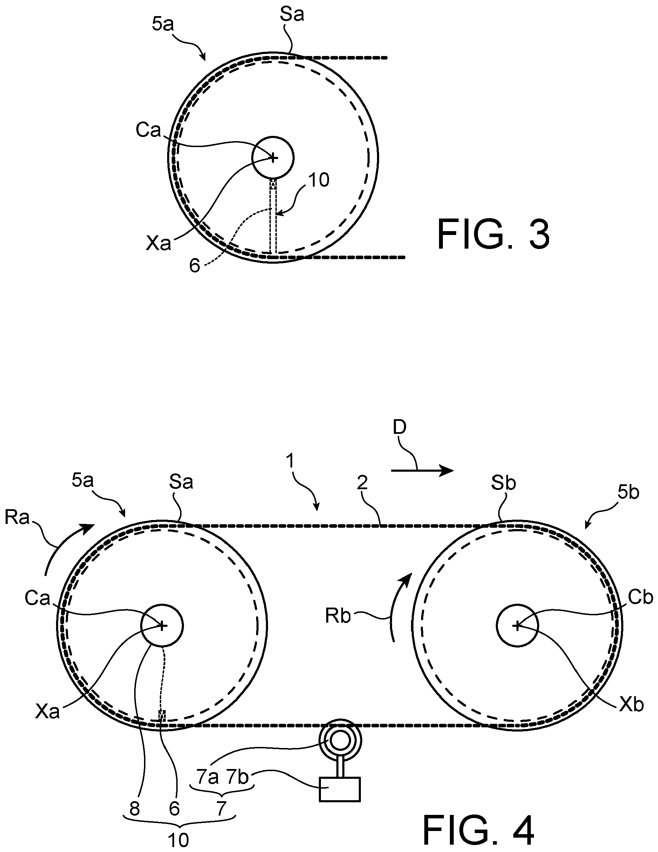

Les figures 3 à 6 décrites ci-après visent à illustrer des exemples de réalisation conformes à l'invention du dispositif 1 de découpe par fil 2 et du procédé dé découpe par fil 2 à l'aide d'un tel dispositif 1, conformes à l'invention. Il est à noter que les exemples décrits ici sont relatifs à des dispositifs 1 de découpe par fil 2 comportant des organes rotatifs 5a, 5b sous la forme de poulies pourvues de gorges annulaires pour le passage et l'entraînement du fil 2. Toutefois, ce choix n'est aucunement limitatif de l'invention.

Tout d'abord, en références aux figures 3 et 4, on a représenté, selon une vue de face partielle, deux exemples de dispositifs 1 de découpe par fil 2 conformes à l'invention, seul un organe rotatif 5a comportant un capteur de détection 6 de la présence du fil 2 étant toutefois représenté sur la figure 3.

Chaque dispositif 1 de découpe par fil 2 comporte un premier organe rotatif 5a autour d'un premier axe de rotation Xa et un deuxième organe rotatif 5b autour d'un deuxième axe de rotation Xb, les premier Xa et deuxième Xb axes de rotation étant sensiblement parallèles entre eux.

Les premier 5a et deuxième 5b organes rotatifs permettent l'entraînement du fil 2 sensiblement perpendiculairement aux premier Xa et deuxième Xb axes de rotation, le fil 2 étant en appui contre la surface extérieure Sa ou Sb de chacun des premier 5a et deuxième 5b organes rotatifs.

Par ailleurs, chaque dispositif 1 comporte un système de détection et de mesure 10 d'une flèche F formée sur le fil 2 du dispositif 1, une telle flèche F étant par exemple telle que celle représentée sur la figure 2 décrite auparavant. Ce système de détection et de mesure 10 est également apte à permettre la détection et la mesure de l'usure de la gorge de la poulie associée 5a, 5b, du fait de la variation de distance entre le capteur de détection 6 et le fil 2, lorsque le fil 2 ne comporte aucune flèche.

Conformément à l'invention, chaque système de détection et de mesure 10 comporte un capteur de détection 6 de la présence du fil 2, intégré à l'intérieur du premier organe rotatif 5a et entraîné ainsi en rotation autour du premier axe de rotation Xa. En particulier, le capteur de détection 6 peut être placé à l'intérieur du premier organe rotatif 5a de sorte à présenter un champ de détection orienté vers la surface extérieure Sa du premier organe rotatif 5a.

Dans l'exemple de la figure 3, le capteur de détection 6 est par exemple du type à induction, et s'étend depuis le centre Ca du premier organe rotatif 5a vers la surface extérieure Sa du premier organe rotatif 5a sans toutefois déboucher dans la gorge annulaire de cette surface extérieure Sa. De la sorte, le capteur de détection 6 est à distance du fil 2, et non au contact du fil 2.

Dans l'exemple de la figure 4, le capteur de détection 6 est situé à proximité de la périphérie du premier organe rotatif 5a.

De plus, sur la figure 4, le système de détection et de mesure 10 comporte également un système électronique de traitement 8, configuré pour déterminer la mesure de la flèche F, à savoir la valeur de la longueur de la flèche F, à partir du signal de détection du fil 2 fourni par le capteur de détection 6.

Comme on peut le voir, ce système électronique de traitement 8 est intégré à l'intérieur du premier organe rotatif 5a, en particulier au niveau de son centre Ca. Il serait toutefois également possible de prévoir un tel système électronique de traitement 8 qui soit déporté du premier organe rotatif 5a. Le cas échéant alors, seuls des moyens d'alimentation en énergie du capteur de détection 6 pourraient être embarqués à l'intérieur du premier organe rotatif 5a.

De plus, le système électronique de traitement 8 comporte avantageusement un système de transmission sans fil, par exemple du type Wifi, Bluetooth, Zig Bee, ou autres, permettant l'échange de données à distance, notamment avec un automate d'asservissement du fonctionnement du dispositif 1 de découpe par fil 2. Un tel automate peut alors comporter un récepteur à recevoir les données transmises à distance par le système de transmission sans fil du système électronique de traitement 8.

De façon avantageuse, chaque capteur de détection 6 est configuré pour fournir un signal de détection du fil 2 du type binaire, renseignant sur la présence ou non du fil 2 pendant la rotation de la poulie 5a, 5b. En particulier, le signal de détection binaire peut comprendre un niveau logique égal à 0 lorsque le capteur 6 ne détecte pas la présence du fil 2 et un niveau logique égal à 1 lorsque le capteur 6 détecte la présence du fil 2, ou bien encore l'inverse. Ce signal de détection est ensuite capté par le système électronique de traitement 8 tel que décrit auparavant en référence à la figure 4, de sorte à pouvoir mesurer la flèche F.

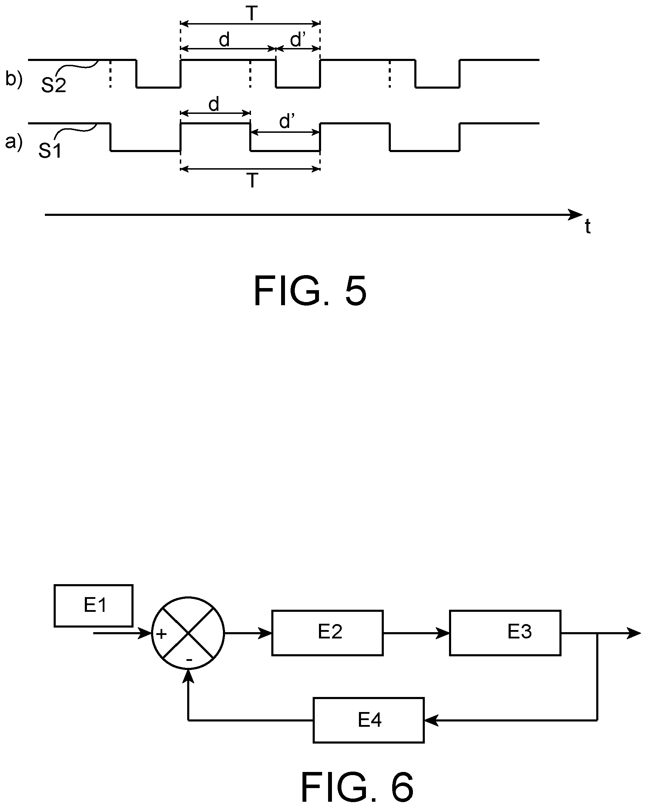

La figure 5 illustre, schématiquement et partiellement, un exemple d'évolution du signal de détection S1 ou S2 reçu par le capteur de détection 6 du dispositif 1 de découpe par fil 2 selon la figure 3 ou 4 en fonction du temps t, pour une configuration a) d'absence de flèche F sur le fil 2 et une configuration b) de présence d'une flèche F sur le fil 2. Le signal de détection S1, S2 obtenu est un signal rectangulaire alternatif de fréquence proportionnelle à la vitesse de rotation de la poulie 5a.

De façon générale pour ces deux configurations, le capteur de détection 6 fournit un signal de détection S1 ou S2 pendant tout le temps de présence du fil 2 dans le champ de détection du capteur 6. Dès lors que le fil 2 disparaît du champ de détection, le signal de détection S1 ou S2 s'arrête. Ainsi, en cas de présence du fil 2, la valeur du signal de détection S1 ou S2 est égale à 1 et, en cas de non détection du fil 2, la valeur du signal de détection S1 ou S2 est égale à 0. Quoi qu'il en soit, le signal de détection S1 ou S2 renseigne sur la distance existante entre le fil 2 et le capteur de détection 6.

Dans la configuration a) d'absence de flèche F sur le fil 2, le rapport cyclique est par exemple égal à 0,5 ou 50 %, valeur initiale qui peut dépendre du nombre de capteurs 6 utilisés.

Le rapport cyclique correspond au rapport entre la durée d pendant laquelle le capteur 6 détecte la présence du fil 2 (le signal est alors égal à 1) et la durée T d'un tour complet de rotation de la poulie 5a. Cette durée T correspond ainsi à la période du signal de détection S1, soit à la somme de la durée d de détection du fil 2 (signal égal à 1) et de la durée d' de non détection du fil 2 (signal égal à 0). Autrement dit, la durée d d'apparition du fil 2 dans le champ du capteur de détection 6 est égale à la moitié de la durée totale T d'une rotation du premier organe rotatif 5a, ou encore égale à la durée d' de non détection du fil 2 par le capteur de détection 6.

Dans la configuration b) de présence de flèche F sur le fil 2, la durée d pendant laquelle le capteur 6 détecte la présence du fil 2 augmente du fait de la présence de la flèche, et la durée d' pendant laquelle le capteur 6 ne détecte pas le fil 2 diminue. Dès lors, le rapport cyclique augmente également et n'est plus égal à 0,5.

Un calculateur embarqué dans le système électronique de traitement 8 peut alors déterminer la valeur de la flèche F par le biais d'une relation établie entre la valeur du rapport cyclique et la longueur de la flèche F, cette relation résultante d'un calibrage préalable du système de détection et de mesure 10 tel que décrit ci-après.

En effet, dans l'exemple de la figure 4, le système de détection et de mesure 10 de la flèche F formée sur le fil 2 comporte un dispositif d'aide au calibrage du capteur de détection 6 pour permettre la détection et la mesure de la flèche F.

Ce dispositif d'aide au calibrage comporte des moyens de formation 7 d'une flèche F sur le fil 2 du dispositif 1, utilisés lors de l'étape de calibrage du procédé selon l'invention.

Plus précisément, ces moyens de formation 6 comportent un élément rotatif 7a, sous la forme d'une petite poulie au contact du fil 2, et un bras de déplacement en translation 7b de l'élément rotatif 7a, sous la forme d'un axe numérique, pour former la flèche F sur le fil 2. L'avancée du bras de déplacement 7b en translation définit la longueur de la flèche F.

Afin de pouvoir établir les différentes phases de calibrage, le capteur de détection 6 et les moyens de formation 7 du dispositif d'aide au calibrage sont couplés électroniquement de sorte que le capteur de détection 6 puisse commander le déplacement en translation du bras de déplacement 7b.

Le calibrage du capteur de détection 6 est alors réalisé de la manière décrite ci-après. Il est à noter que cette étape de calibrage n'est réalisée qu'une seule fois tant que les paramètres liés au dispositif 1 de découpe par fil 2 restent inchangés, et notamment tant que les caractéristiques géométriques des organes rotatifs 5a, 5b, par exemple le diamètre, les caractéristiques du fil 2, ou encore la vitesse de rotation des organes rotatifs 5a, 5b restent inchangées.

L'étape de calibrage consiste alors plus précisément à créer volontairement sur le fil 2 une flèche F de différentes longueurs, c'est-à-dire dont la longueur va varier au cours du calibrage, débutant par exemple à 0 mm (absence de flèche) puis variant par pas d'au moins 1 mm. Pour ce faire, on utilise le dispositif d'aide au calibrage décrit précédemment et représenté sur la figure 4. Le capteur de détection 6 est électroniquement couplé au dispositif d'aide au calibrage, et notamment au bras de déplacement 7b. De cette façon, le capteur de détection 6 commande le déplacement en translation du bras de déplacement 7b de manière à ce que l'élément rotatif 7a vienne appuyer contre le fil 2 pour créer une flèche F. Le déplacement vertical du bras de déplacement 7b correspond alors à la longueur donnée à la flèche F.

Ainsi, initialement, aucune flèche F n'est créée de sorte à obtenir la référence du calibrage. On détermine alors la valeur du rapport cyclique entre les durées d et T telles que décrites précédemment. Puis, une série de valeurs connues de la flèche F est mise en place, pas commande du capteur de détection 6 sur le bras de déplacement 7b, visant notamment à faire translater le bras de déplacement 7b par pas d'environ au moins 1 mm. Par exemple, la série de valeurs d'environ 3 mm, 6 mm, 12 mm, 18 mm, voire plus, peut être créée.

A chaque valeur de la flèche F, un signal de détection (évolution des durées d, d'et T telles que décrites précédemment) est obtenu par le capteur de détection 6 qui est envoyé au système électronique de traitement 8 décrit ci-dessous, qui va déterminer une valeur correspondante de rapport cyclique de la flèche F.

De cette façon, le calibrage permet d'obtenir une corrélation entre le rapport cyclique de la flèche F et la longueur de la flèche F. Ainsi, dès lors qu'une augmentation du rapport cyclique est constatée lors du fonctionnement du système de détection et de mesure 10 selon l'invention, comme pour le signal S2 de la figure 5 commentée auparavant, il est possible de conclure à la détection d'une flèche F sur le fil 2 et la valeur du rapport cyclique permet de déterminer la mesure de la longueur de la flèche F par le biais de la corrélation obtenue à la suite du calibrage.

Il est donc à noter que le système de détection et de mesure 10 selon l'invention peut être utilisé pour permettre la détection d'une flèche F sur le fil 2 à la suite d'une augmentation du rapport cyclique déterminé par le signal de détection et la détermination de la mesure de cette flèche F grâce à la corrélation établie lors du calibrage entre rapport cyclique et longueur de flèche F par l'intermédiaire du système électronique de traitement 8.

Toutefois, de façon avantageuse, le système de détection et de mesure 10 selon l'invention pourrait être aussi uniquement utilisé pour fournir une information concernant la présence indésirable ou non d'une flèche F sur le fil 2, le système électronique de traitement 8 pouvant en particulier comporter des moyens de comparaison entre la valeur mesurée de la flèche F et une valeur consigne prédéterminée à partir de laquelle on considère qu'il y a une flèche F néfaste au système.

En outre, le signal de sortie S1, S2 du capteur de détection 6 peut être analogique ou numérique. A la différence d'un signal analogique, un signal numérique peut permettre au système électronique de traitement 8 d'interpréter une différence de rapport cyclique par rapport au rapport cyclique de calibrage en l'absence de flèche comme une usure du revêtement de la gorge de la poulie 5a, 5b.

Par ailleurs, la figure 6 est un schéma-blocs illustrant l'étape d'asservissement d'un procédé de découpe par fil 2 conforme à l'invention.

Selon cette étape d'asservissement, une consigne de rapport cyclique est donnée en sous-étape E1. Puis, la vitesse de rotation correspondante du premier organe rotatif 5a du dispositif 1 est déterminée en sous-étape E2 à partir de cette consigne, de sorte à agir sur le moteur entraînant en rotation le premier organe rotatif 5a en sous-étape E3. Alors, la détection et la mesure de la flèche F sur le fil 2 en sous-étape E4 permet un ajustement éventuel de la consigne de rapport cyclique en fonction des résultats de détection et de mesure de la flèche F. Une valeur exacte de la flèche F peut en effet être donnée à un automate d'asservissement du fonctionnement du dispositif 1 du fait de la corrélation obtenue entre rapport cyclique et longueur de flèche lors de l'étape de calibrage du capteur de détection 6.

Bien entendu, l'invention n'est pas limitée aux exemples de réalisation qui viennent d'être décrits. Diverses modifications peuvent y être apportées par l'homme du métier, sous réserve qu'elles soient couvertent par l'étendue des revendications.

## Revendications

1. Dispositif (1) de découpe par fil (2) d'une pièce à découper (3), destinée à être en mouvement par rapport au fil (2) pour en permettre la découpe, comportant au moins un premier organe rotatif (5a) autour d'un premier axe de rotation (Xa) et un deuxième organe rotatif (5b) autour d'un deuxième axe de rotation (Xb), lesdits premier (Xa) et deuxième (Xb) axes de rotation étant sensiblement parallèles entre eux, lesdits au moins un premier (5a) et un deuxième (5b) organes rotatifs permettant l'entraînement du fil (2) sensiblement perpendiculairement auxdits premier (Xa) et deuxième (Xb) axes de rotation, le fil (2) étant en appui contre la surface extérieure (Sa, Sb) de chacun desdits au moins un premier (5a) et un deuxième (5b) organes rotatifs s'étendant autour de l'axe de rotation (Xa, Xb) correspondant, le dispositif (1) comportant en outre un système de détection et de mesure (10) d'une flèche (F) formée sur le fil (2) du dispositif (1),
**caractérisé en ce que**
ledit système de détection et de mesure (10) comporte au moins un capteur de détection (6) de la présence ou non du fil (2), intégré à l'intérieur d'au moins l'un desdits au moins un premier organe rotatif (5a) et un deuxième organe rotatif (5b) et entraîné ainsi en rotation par celui-ci, le capteur de détection (6) étant configuré pour fournir un signal de détection de la présence ou non du fil (2) pendant la rotation dudit au moins l'un desdits au moins un premier organe rotatif (5a) et un deuxième organe rotatif (5b), ledit capteur de détection renseignant aussi sur la présence ou non d'une flèche (F) formée sur le fil (2), et **en ce que** ledit système de détection et de mesure (10) comporte de plus un système électronique de traitement (8) configuré pour déterminer la mesure de la flèche (F) à partir du signal de détection du fil (2) fourni par le capteur de détection (6).

2. Dispositif selon la revendication 1, **caractérisé en ce que** le système de détection et de mesure (10) de la flèche (F) formée sur le fil (2) du dispositif (1) est configuré pour permettre la détection et la mesure de l'usure de la surface extérieure (Sa, Sb) dudit au moins l'un desdits au moins un premier organe rotatif (5a) et un deuxième organe rotatif (5b).

3. Dispositif selon la revendication 1 ou 2, **caractérisé en ce que** le système électronique de traitement (8) est intégré à l'intérieur dudit au moins l'un desdits au moins un premier organe rotatif (5a) et un deuxième organe rotatif (5b).

4. Dispositif selon l'une des revendications précédentes, **caractérisé en ce que** le système électronique de traitement (8) comporte un système de transmission sans fil permettant l'échange de données à distance, notamment avec un automate d'asservissement du fonctionnement du dispositif (1) de découpe par fil (2).

5. Dispositif selon l'une quelconque des revendications précédentes, **caractérisé en ce qu'**au moins l'un desdits au moins un premier (5a) et un deuxième (5b) organes rotatifs, notamment les deux, comporte une poulie pourvue d'une gorge sur sa surface extérieure (Sa, Sb) pour permettre le positionnement et l'entraînement du fil (2).

6. Dispositif selon la revendication 5, **caractérisé en ce que** le capteur de détection (6) est situé à l'intérieur dudit au moins l'un desdits au moins un premier (5a) et un deuxième (5b) organes rotatifs à distance de la gorge, notamment tel que l'extrémité du capteur de détection (6) ne débouche pas en fond de gorge.

7. Dispositif selon l'une quelconque des revendications précédentes, **caractérisé en ce que** le capteur de détection (6) est configuré pour faire la distinction entre la surface extérieure (Sa, Sb) dudit au moins l'un desdits au moins un premier organe rotatif (5a) et un deuxième organe rotatif (5b) à l'intérieur duquel il est intégré et le fil (2) en appui contre cette surface extérieure (Sa, Sb), étant en particulier choisi parmi un capteur inductif, capacitif, magnétique ou optique.

8. Dispositif selon l'une quelconque des revendications précédentes, **caractérisé en ce que** le système de détection et/ou de mesure (10) de la flèche (F) formée sur le fil (2) comporte un dispositif d'aide au calibrage du capteur de détection (6) pour permettre la détection de la flèche (F).

9. Dispositif selon la revendication 8, **caractérisé en ce que** le dispositif d'aide au calibrage comporte des moyens de formation (7) d'une flèche (F) sur le fil (2) du dispositif (1).

10. Dispositif selon la revendication 9, **caractérisé en ce que** les moyens de formation (6) comportent un élément rotatif (7a) au contact du fil (2) du dispositif (1), notamment une poulie, et un bras de déplacement en translation (7b) de l'élément rotatif (7a), notamment un axe numérique, pour former la flèche (F) sur le fil (2), l'avancée du bras de déplacement (7b) en translation définissant la longueur de la flèche (F).

11. Dispositif selon la revendication 10, **caractérisé en ce que** le capteur de détection (6) et les moyens de formation (7) du dispositif d'aide au calibrage sont couplés électroniquement de sorte que le capteur de détection (6) puisse commander le déplacement en translation du bras de déplacement (7b).

12. Procédé de découpe par fil (2) d'une pièce à découper (3), **caractérisé en ce qu'**il est mis en oeuvre au moyen d'un dispositif (1) de découpe par fil (2) selon l'une quelconque des revendications précédentes, et **en ce qu'**il comporte l'étape de détection et de mesure d'une flèche (F) formée sur le fil (2) du dispositif (1) au moyen du système de détection et de mesure (10) du dispositif (1).

13. Procédé selon la revendication 12, **caractérisé en ce qu'**il comporte une étape de calibrage du capteur de détection (6) du système de détection et de mesure (10), cette étape de calibrage comportant notamment la variation de longueur d'une flèche (F) formée sur le fil (2) par le biais de moyens de formation (7) d'une flèche (F) au moyen d'un dispositif d'aide au calibrage du capteur de détection (6), le capteur de détection (6) collectant différents signaux de détection du fil (2) lors de cette variation de longueur de la flèche (F) sur le fil (2).

14. Procédé selon la revendication 13, **caractérisé en ce qu'**une corrélation entre le rapport cyclique d'apparition de la flèche (F) et la longueur de la flèche (F) est effectuée à l'issue de l'étape de calibrage.

15. Procédé selon l'une des revendications 12 à 14, **caractérisé en ce qu'**il comporte l'étape de détection et de mesure de la flèche (F) formée sur le fil (2) du dispositif (1) par l'intermédiaire du capteur de détection (6) et du système électronique de traitement (8) du système de détection et de mesure (10) du dispositif (1), et l'étape de transmission de données à un automate d'asservissement du fonctionnement du dispositif (1) de découpe par fil (2).

16. Procédé selon l'une quelconque des revendications 12 à 15, **caractérisé en ce qu'**il comporte l'étape d'asservissement du fonctionnement du dispositif (1) de découpe par fil (2), celle-ci comportant la fourniture d'une consigne de rapport cyclique d'apparition de la flèche (F), la détermination de la vitesse de rotation correspondante desdits au moins un premier (5a) et un deuxième (5b) organes rotatifs du dispositif (1), la détection et la mesure de la flèche (F) sur le fil (2), et l'ajustement éventuel de la consigne de rapport cyclique d'apparition de la flèche (F) en fonction de cette détection et mesure de la flèche (F).

## Patentansprüche

1. Vorrichtung (1) zum Schneiden eines zu schneidenden Werkstücks (3) mittels Draht (2), das dazu ausgelegt ist, bezüglich des Drahts (2) in Bewegung zu sein, um sein Schneiden zu ermöglichen, umfassend wenigstens ein erstes um eine erste Drehachse (Xa) drehendes Organ (5a) und ein zweites um eine zweite Drehachse (Xb) drehendes Organ (5b), wobei die erste (Xa) und die zweite (Xb) Drehachse im Wesentlichen parallel zueinander sind, wobei das wenigstens eine erste (5a) und das zweite (5b) Drehorgan den Antrieb des Drahts (2) im Wesentlichen orthogonal zu der ersten (Xa) und der zweiten (Xb) Drehachse ermöglichen, wobei der Draht (2) in Anlage gegen die äußere Oberfläche (Sa, Sb) von jedem von dem wenigstens einen ersten (5a) und dem zweiten (5b) Drehorgan ist, die sich um die entsprechende Drehachse (Xa, Xb) herum erstreckt, wobei die Vorrichtung (1) ferner ein System zur Erfassung und zur Messung (10) einer Durchbiegung (F) umfasst, die bei dem Draht (2) der Vorrichtung (1) gebildet ist,
**dadurch gekennzeichnet, dass** das System zur Erfassung und zur Messung (10) wenigstens einen Sensor (6) zur Erfassung des Vorhandenseins oder des Fehlens des Drahts (2) umfasst, der im Inneren von wenigstens einem von dem wenigstens einen ersten Drehorgan (5a) und dem zweiten Drehorgan (5b) integriert ist und somit durch dieses in Drehung angetrieben wird, wobei der Erfassungssensor (6) dazu ausgelegt ist, ein Erfassungssignal des Vorhandenseins oder des Fehlens des Drahts (2) während der Drehung des wenigstens einen von dem wenigstens einem ersten Drehorgan (5a) und dem zweiten Drehorgan (5b) zu liefern, wobei der Erfassungssensor ferner Auskunft gibt über das Vorhandensein oder Fehlen einer Durchbiegung (F), die bei dem Draht (2) gebildet ist, und dass das System zur Erfassung und zur Messung (10) ferner ein elektronisches Verarbeitungssystem (8) umfasst, das dazu ausgelegt ist, die Messung der Durchbiegung (F) ausgehend von dem Erfassungssignal des Drahts (2) zu bestimmen, das durch den Erfassungssensor (6) geliefert wird.

2. Vorrichtung nach Anspruch 1, **dadurch gekennzeichnet, dass** das System zur Erfassung und zur Messung (10) der Durchbiegung (F), die bei dem Draht (2) der Vorrichtung (1) gebildet ist, dazu ausgelegt ist, die Erfassung und die Messung der Abnutzung der äußeren Oberfläche (Sa, Sb) des wenigstens einen von dem wenigstens einen ersten Drehorgan (5a) und dem zweiten Drehorgan (5b) zu ermöglichen.

3. Vorrichtung nach Anspruch 1 oder 2, **dadurch gekennzeichnet, dass** das elektronische Verarbeitungssystem (8) im Inneren des wenigstens einen von dem wenigstens einen ersten Drehorgan (5a) und dem zweiten Drehorgan (5b) integriert ist.

4. Vorrichtung nach einem der vorhergehenden Ansprüche, **dadurch gekennzeichnet, dass** das elektronische Verarbeitungssystem (8) ein drahtloses Übertragungssystem umfasst, das den Datenaustausch über einen Abstand ermöglicht, insbesondere mit einem Automat zur Steuerung der Funktion der Vorrichtung (1) zum Schneiden mittels Draht (2).

5. Vorrichtung nach einem der vorhergehenden Ansprüche, **dadurch gekennzeichnet, dass** wenigstens eines von dem wenigstens einen ersten (5a) und dem zweiten (5b) Drehorgan, insbesondere beide, eine Rolle umfasst, die mit einer Kehle auf ihrer äußeren Oberfläche (Sa, Sb) versehen ist, um die Positionierung und den Antrieb des Drahts (2) zu ermöglichen.

6. Vorrichtung nach Anspruch 5, **dadurch gekennzeichnet, dass** der Erfassungssensor (6) im Inneren des wenigstens einen von dem wenigstens einen ersten (5a) und dem zweiten (5b) Drehorgan in einem Abstand von der Kehle angeordnet ist, insbesondere derart, dass das Ende des Erfassungssensors (6) nicht am Boden der Kehle mündet.

7. Vorrichtung nach einem der vorhergehenden Ansprüche, **dadurch gekennzeichnet, dass** der Erfassungssensor (6) dazu ausgelegt ist, eine Unterscheidung zu treffen zwischen der äußeren Oberfläche (Sa, Sb) des wenigstens einen von dem wenigstens einen ersten Drehorgan (5a) und dem zweiten Drehorgan (5b), in dessen Inneren er integriert ist, und dem Draht (2) in Anlage gegen diese äußere Oberfläche (Sa, Sb), und insbesondere ausgewählt ist aus einem induktiven, kapazitiven, magnetischen oder optischen Sensor.

8. Vorrichtung nach einem der vorhergehenden Ansprüche, **dadurch gekennzeichnet, dass** das System zur Erfassung und/oder zur Messung (10) der Durchbiegung (F), die bei dem Draht (2) gebildet ist, eine Vorrichtung zur Unterstützung der Kalibrierung des Erfassungssensors (6) umfasst, um die Erfassung der Durchbiegung (F) zu ermöglichen.

9. Vorrichtung nach Anspruch 8, **dadurch gekennzeichnet, dass** die Vorrichtung zur Unterstützung der Kalibrierung Mittel (7) zur Bildung einer Durchbiegung (F) bei dem Draht (2) der Vorrichtung (1) umfasst.

10. Vorrichtung nach Anspruch 9, **dadurch gekennzeichnet, dass** die Mittel (6) zur Bildung ein Drehelement (7a) in Kontakt mit dem Draht (2) der Vorrichtung (1) umfassen, insbesondere eine Rolle, sowie einen Arm (7b) zur Translationsverlagerung des Drehelements (7a), insbesondere eine numerische Achse, um die Durchbiegung (F) bei dem Draht (2) zu bilden, wobei die Vorwärtsbewegung des Arms (7b) zur Translationsverlagerung die Länge der Durchbiegung (F) definiert.

11. Vorrichtung nach Anspruch 10, **dadurch gekennzeichnet, dass** der Erfassungssensor (6) und die Bildungsmittel (7) der Vorrichtung zur Unterstützung der Kalibrierung elektronisch derart gekoppelt sind, dass der Erfassungssensor (6) die Translationsverlagerung des Verlagerungsarms (7b) steuern kann.

12. Verfahren zum Schneiden eines zu schneidenden Werkstücks (3) mittels Draht (2), **dadurch gekennzeichnet, dass** es mittels einer Vorrichtung (1) zum Schneiden mittels Draht (2) nach einem der vorhergehenden Ansprüche durchgeführt wird, und dass es den Schritt der Erfassung und der Messung einer Durchbiegung (F), die bei dem Draht (2) der Vorrichtung (1) gebildet ist, mit Hilfe des Systems zur Erfassung und zur Messung (10) der Vorrichtung (1) umfasst.

13. Verfahren nach Anspruch 12, **dadurch gekennzeichnet, dass** es einen Schritt der Kalibrierung des Erfassungssensors (6) des Systems zur Erfassung und zur Messung (10) umfasst, wobei dieser Kalibrierungsschritt insbesondere das Variieren der Länge einer bei dem Draht (2) gebildeten Durchbiegung (F) durch Mittel (7) zur Bildung einer Durchbiegung (F) mit Hilfe einer Vorrichtung zur Unterstützung der Kalibrierung des Erfassungssensors (6) umfasst, wobei der Erfassungssensor (6) während dieser Variierung der Länge der Durchbiegung (F) bei dem Draht (2) verschiedene Signale zur Erfassung des Drahts (2) sammelt.

14. Verfahren nach Anspruch 13, **dadurch gekennzeichnet, dass** eine Korrelation zwischen dem zyklischen Verhältnis des Auftretens der Durchbiegung (F) und der Länge der Durchbiegung (F) am Ende des Kalibrierungsschritts durchgeführt wird.

15. Verfahren nach einem der Ansprüche 12 bis 14, **dadurch gekennzeichnet, dass** es den Schritt der Erfassung und der Messung der bei dem Draht (2) der Vorrichtung (1) gebildeten Durchbiegung (F) mittels des Erfassungssensors (6) und des elektronischen Verarbeitungssystems (8) des Systems zur Erfassung und zur Messung (10) der Vorrichtung (1) umfasst, sowie den Schritt der Übertragung von Daten an einen Automat zur Steuerung der Funktion der Vorrichtung (1) zum Schneiden mittels Draht (2).

16. Verfahren nach einem der Ansprüche 12 bis 15, **dadurch gekennzeichnet, dass** es den Schritt des Steuerns der Funktion der Vorrichtung (1) zum Schneiden mittels Draht (2) umfasst, wobei dieser die Lieferung eines Sollwerts des zyklischen Verhältnisses des Auftretens der Durchbiegung (F) umfasst, die Bestimmung der entsprechenden Drehgeschwindigkeit des wenigstens einen ersten (5a) und des zweiten (5b) Drehorgans der Vorrichtung (1), die Erfassung und die Messung der Durchbiegung (F) bei dem Draht (2), und die eventuelle Anpassung des Sollwerts des zyklischen Verhältnisses des Auftretens der Durchbiegung (F) als Funktion dieser Erfassung und Messung der Durchbiegung (F).

## Claims

1. Device (1) for cutting by wire (2) of a part to be cut (3), intended to be in motion with respect to the wire (2) to enable the cutting thereof, comprising at least one first rotary member (5a) about a first axis of rotation (Xa) and a second rotary member (5b) about a second axis of rotation (Xb), said first (Xa) and second (Xb) axes of rotation being substantially mutually parallel, said at least one first (5a) and one second (5b) rotary members enabling driving of the wire (2) substantially perpendicularly to said first (Xa) and second (Xb) axes of rotation, the wire (2) bearing against the outer surface (Sa, Sb) of each of said at least one first (5a) and one second (5b) rotary members extending about the corresponding axis of rotation (Xa, Xb), the device (1) further comprising a detection and measurement system (10) of a sag (F) formed on the wire (2) of the device (1), **characterised in that**
said detection and measurement system (10) comprises at least one detection sensor (6) of the presence or not of the wire (2), included within at least one of said at least one first rotary member (5a) and one second rotary member (5b) and thus rotated thereby, the detection sensor (6) being configured to provide a signal on the detection of the presence or not of the wire (2) during the rotation of said at least one of said at least one first rotary member (5a) and one second rotary member (5b), said detection sensor also providing information on the presence or not of a sag (F) formed on the wire (2),
and **in that** the detection and measurement system (10) further comprises an electronic processing system (8) configured to determine the measurement of the sag (F) on the basis of the detection signal of the wire (2) supplied by the detection sensor (6).

2. Device according to claim 1, **characterised in that** the detection and measurement system (10) of the sag (F) formed on the wire (2) of the device (1) is configured to enable the detection and measurement of the wear of the outer surface (Sa, Sb) of said at least one of said at least one first rotary member (5a) and one second rotary member (5b).

3. Device according to claim 1 or 2, **characterised in that** the electronic processing system (8) is integrated within said at least one of said at least one first rotary member (5a) and one second rotary member (5b).

4. Device according to one of the preceding claims, **characterised in that** the electronic processing system (8) comprises a wireless transmission system enabling remote data exchange, particularly with a servo controller of the operation of the device (1) for cutting by wire (2).

5. Device according to any one of the preceding claims, **characterised in that** at least one of said at least one first (5a) and one second (5b) rotary members, particularly both, comprises a pulley provided with a groove on the outer surface (Sa, Sb) thereof to enable the positioning and driving of the wire (2).

6. Device according to claim 5, **characterised in that** the detection sensor (6) is located within said at least one of said at least one first (5a) and one second (5b) rotary members at a distance from the groove, particularly such that the end of the detection sensor (6) does not lead to the groove base.

7. Device according to any one of the preceding claims, **characterised in that** the detection sensor (6) is configured to distinguish between the outer surface (Sa, Sb) of said at least one of said at least one first rotary member (5a) and one second rotary member (5b) within which it is integrated and the wire (2) bearing against this outer surface (Sa, Sb), being in particular chosen from an inductive, capacitive, magnetic or optical sensor.

8. Device according to any one of the preceding claims, **characterised in that** the detection and/or measurement system (10) of the sag (F) formed on the wire (2) comprises a device for assisting with the calibration of the detection sensor (6) to enable the detection of the sag (F).

9. Device according to claim 8, **characterised in that** the device for assisting with calibration comprises formation means (7) of a sag (F) on the wire (2) of the device (1).

10. Device according to claim 9, **characterised in that** the formation means (6) comprise a rotary element (7a) in contact with the wire (2) of the device (1), particularly a pulley, and a translational movement arm (7b) of the rotary element (7a), particularly a numerically controlled axis, to form the sag (F) on the wire (2), the progress of the translational movement arm (7b) defining the length of the sag (F).

11. Device according to claim 10, **characterised in that** the detection sensor (6) and the formation means (7) of the device for assisting with calibration are electronically coupled such that the detection sensor (6) can control the translational movement of the movement arm (7b).

12. Method for cutting by wire (2) of a part to be cut (3), **characterised in that** it is implemented by means of a device (1) for cutting by wire (2) according to any one of the preceding claims, and **in that** it comprises the step of detecting and measuring a sag (F) formed on the wire (2) of the device (1) by means of the measurement and detection system (10) of the device (1).

13. Method according to claim 12, **characterised in that** it comprises a step of calibrating the detection sensor (6) of the measurement and detection system (10), this calibration step particularly comprising the variation of length of the sag (F) formed on the wire (2) via formation means (7) of a sag (F) by means of a device for assisting with the calibration of the detection sensor (6), the detection sensor (6) collecting various detection signals of the wire (2) during this variation of length of the sag (F) on the wire (2).

14. Method according to claim 13, **characterised in that** a correlation between the cyclic occurrence ratio of the sag (F) and the length of the sag (F) is carried out at the end of the calibration step.

15. Method according one of claims 12 to 14, **characterised in that** it comprises the step of detecting and measuring the sag (F) formed on the wire (2) of the device (1) via the detection sensor (6) and the electronic processing system (8) of the detection and measurement system (10) of the device (1), and the step of transmitting data to a servo controller of the operation of the device (1) for cutting by wire (2).

16. Method according to any one of claims 12 to 15, **characterised in that** it comprises the step of servo controlling the operation of the device (1) for cutting by wire (2), the latter comprising providing a cyclic occurrence ratio set-point of the sag (F), determining the corresponding rotational speed of said at least one first (5a) and one second (5b) rotary members of the device (1), detecting and measuring the sag (F) on the wire (2), and optionally adjusting the cyclic occurrence ratio set-point of the sag (F) according to this detection and measurement of the sag (F).
